Europäisches Patentamt

European Patent Office

Office européen des brevets

(11) Veröffentlichungsnummer: **0 240 612**
**A2**

(12) **EUROPÄISCHE PATENTANMELDUNG**

(21) Anmeldenummer: **86118150.1**

(22) Anmeldetag: **30.12.86**

(51) Int. Cl.⁴: **B62J 7/02**

(30) Priorität: **11.04.86 DE 3612309**

(43) Veröffentlichungstag der Anmeldung:
**14.10.87 Patentblatt 87/42**

(84) Benannte Vertragsstaaten:
**AT BE CH DE ES FR GB IT LI LU NL SE**

(71) Anmelder: **KRAUSER Kraftfahrzeug-Zubehör Vertriebs-GmbH**
**Hörmannsbergerstrasse 18**
**D-8905 Mering(DE)**

(72) Erfinder: **Krauser, Michael**
**Hörmannbergerstrasse 18**
**D-8905 Mering(DE)**

(74) Vertreter: **von Kirschbaum, Albrecht,**
**Dipl.-Ing.**
**Hermann-Ehlers-Strasse 21a**
**D-8034 Germering(DE)**

(54) **Das Hinterrad eines Motorrads umgreifende Halterungseinrichtung für Gepäckstücke, insbesondere Motorradkoffer.**

(57) Ein das Hinterrad eines Motorrads umgreifende Halterungseinrichtung für Gepäckstücke, insbesondere Motorradkoffer, weist zwei seitliche Halterungsteile mit Befestigungen für ein die beiden seitlichen Halterungsteile nach oben überragendes und nach hinten umklappbares Seitenteil aufweist; die beiden Seitenteile sind durch eine an ihren Oberkanten angebrachten Gepäckbrücke miteinander verbunden.

Von den in den seitlichen Halterungsteilen vorgesehenen Befestigungen ist eine hintere Befestigung jeweils als ein im unteren Bereich jedes der Seitenteile vorgesehener Bolzen ausgebildet, der etwa waagrecht von dem jeweiligen Seitenteil nach außen absteht und mit diesem eine Einheit bildet bzw. starr mit dem Seitenteil verbunden ist. Im montierten Zustand der Halterungseinrichtung ist der etwa waagrecht nach außen abstehende Bolzen in einer am äußersten Ende des seitlichen Halterungsteils vorgesehenen Bohrung aufgenommen.

Als vordere Befestigung zwischen dem jeweiligen Seitenteil und dem entsprechenden seitlichen Halterungsteil ist vorzugsweise ein lösbarer Bolzen vorgesehen. Um die Seitenteile mit der sie verbindenden Gepäckbrücke nach hinten etwa um 90° zurückklappen zu können, braucht lediglich dieser lösbare Schraubbolzen herausgenommen zu werden. Zur Sicherung der in die Ausganglage zurückgeklappten Seitenteile mit der sie verbindenden Brücke braucht dann nur der Schraubbolzen in die im Tragelement sowie in dem zugeordneten Seitenteil ausgebildeten Bohrungen eingeführt und festgeschraubt zu werden.

## Das Hinterrad eines Motorrads umgreifende Halterungseinrichtung für Gepäckstücke, insbesondere Motorradkoffer

Die Erfindung betrifft eine das Hinterrad eines Motorrads umgreifende Halterungseinrichtung für Gepäckstücke, insbesondere Motorradkoffer nach dem Oberbegriff des Anspruchs 1.

Aus der DE-PS 32 11 308 ist eine solche Halterungseinrichtung für Gepäckstücke, insbesondere Motorradkoffer, mit zwei seitlichen Halterungsteilen bekannt, welche jeweils im hinteren, oberen Bereich eine vordere und eine hintere Befestigung für jeweils einen das Halterungsteil nach oben überragenden Rahmenteil aufweist. Die beiden Rahmenteile sind an ihrer Oberseite durch eine Gepäckbrücke miteinander verbunden.

Bei dieser bekannten Halterungseinrichtung ist die vordere Befestigung zwischen Rahmenteil und Halterungsteil leicht lösbar ausgebildet, so daß das vordere Ende jedes Rahmenteils von dem zugehörigen Halterungsteil abgehoben werden kann. Die hintere Befestigung enthält jeweils zwei höhenversetzt übereinander angeordnete, von Befestigungsschrauben durchsetzte Durchbrüche, welche als Schlitzführungen ausgebildet sind, so daß nach einem Lösen der sie durchdringenden Befestigungsschrauben die beiden Rahmenteile samt der sie verbindenden Gepäckbrücke um etwa 90° zurückgeklappt werden können.

Ferner weist die vordere Verbindung der Rahmenteile einen in einer vertikalen Ebene geschlitzten, nach vorne konisch zulaufenden Ansatz auf, in welchem auf beiden Seiten jedes der beiden Halterungsteile eine in Fahrtrichtung hinten nach oben offene Vertiefung vorgesehen ist, an welche sich eine zur Aufnahme des konisch zulaufenden Ansatzes des jeweiligen Rahmenteils entsprechend ausgebildete, nach oben geschlossene Vertiefung anschließt.

Wenn bei der bekannten Halterungseinrichtung die Gepäckbrükke um etwa 90° nach hinten zurückgeklappt werden soll, müssen die beiden, die hinteren Durchbrüche durchsetzenden Befestigungsschrauben gelockert werden. Dann müssen die seitlichen Rahmenteile, an deren oberem Ende die Gepäckbrücke befestigt ist, soweit nach hinten verschoben werden, bis die vordere Befestigung in Form des geschlitzten, nach vorne konisch zulaufenden Ansatzes aus dem nach oben offenen Bereich der Vertiefung herausgehoben werden kann. Erst jetzt kann die an den seitlichen Rahmenteilen angebrachte Gepäckbrücke nach hinten zurückgeklappt werden, wobei die am hinteren Ende im unteren, waagrecht verlaufenden Durchbruch aufgenommene und gelockerte Befestigungsschraube als Drehpunkt dient.

Die bekannte Halterungseinrichtung, mit der nach hinten um 90° zurückklappbaren Brücke ist somit im Aubau aufwendig und aus in der Handhabung verhältnismäßig kompliziert. Damit die die beiden hinteren Durchbrüche durchdringenden Befestigungsschrauben, welche nach jedem Zurückklappen und Vorschieben fest angezogen werden müssen, sich auf keinen Fall im Verlauf des späteren Fahrbetriebs lochern, muß der feste Sitz der die hinteren Durchbrüche durchdringenden Befestigungsschrauben in regelmäßigen Abständen gewissenhaft überprüft werden, und jedes Lockern der Befestigungsschrauben muß durch Festziehen behoben werden. Nur durch eine solche gewissenhafte Überprüfung kann ausgeschlossen werden, daß sich die Befestigungsschrauben im Laufe der Zeit nicht lockern, damit nicht während einer Fahrt die in vielen Fällen mit einem Motorradkoffer beladene Gepäckbrücke nach hinten zurückklappt.

Aufgabe der Erfindung ist es daher, eine hochbelastbare und in sich stabile Halterungseinrichtung mit zurückklappbarer Gepäckbrücke zu schaffen, welche bezüglich Aufbau und Ausführung nicht kompliziert und auch hinsichtlich der Handhabung einfach ist, und bei welcher ein versehentliches, unbeabsichtigtes Zurückklappen der Gepäckbrücke wirksam unterbunden ist. Gemäß der Erfindung ist dies bei einer Halterungseinrichtung nach dem Oberbegriff des Anspruchs 1 durch die Merkmale im kennzeichnenden Teil des Anspruchs 1 erreicht. Vorteilhafte Weiterbildungen der Erfindung sind Gegenstand der Unteransprüche.

Gemäß einer bevorzugten Ausführungsform der Erfindung ist die hintere Befestigung für die die beiden seitlichen Halterungsteile nach oben überragenden und umklappbaren Seitenteile jeweils als ein im unteren Bereich dieses Seitenteils etwa waagrecht von diesem nach außen abstehender und mit diesem eine Einheit bildender, vorzugsweise starr verbundener Bolzen ausgeführt ist, welcher in eine entsprechend bemessene Bohrung am äußersten Ende des jeweiligen Halterungsteils aufgenommen ist.

Ferner ist bei der erfindungsgemäßen Halterungseinrichtung die vordere Befestigung zwischen jedem Seitenteil und dem entsprechenden seitlichen Halterungsteil jeweils als lösbarer und herausnehmbarer Schraubbolzen ausgebildet, so daß nach dessen Herausnahme die beiden Seitenteile zusammen mit der sie verbindenden Gepäckbrücke um etwa 90° nach hinten zurückklappbar sind.

Gemäß einer bevorzugten Weiterbildung der Erfindung kann der von dem Seitenteil etwa waagrecht abstehende und mit dieser starr verbundene bzw. eine Einheit bildende Bolzen an sei nem freien Ende als Schraubbolzen ausgeführt sein, auf welchen nach Einführung in die Bohrung am äußersten Ende des Halterungsteils zur Sicherung eine Mutter aufschraubbar ist.

Ferner kann eine vorteilhafte Modifikation der Erfindung darin bestehen, daß statt des vom Seitenteil abstehenden Bolzens ein separater Schraubbolzen durch eine im unteren Abschnitt des jeweiligen Seitenteils ausgebildete Bohrung durch die entsprechende Bohrung am äußersten Ende des Tragteils einführbar ist und dann in Abhängigkeit davon, in welcher Richtung der Schraubbolzen eingeführt ist, von außen oder von innen durch eine Schraubmutter sicherbar ist.

Wenn somit bei der erfindungsgemäßen Halterungseinrichtung die Gepäckbrücke mit oder ohne darauf angebrachtem Koffer nach hinten zurückgeklappt werden soll, braucht nur der vordere Schraubbolzen gelöst und herausgenommen werden, und sofort kann die Gepäckbrücke um etwa 90° nach hinten zurückgeklappt werden. Nach einem Umklappen der Gepäckbrücke in ihre Ausgangslage braucht dann jeweils nur auf jeder Seite der jeweilige Schraubbolzen eingeführt und in die vorzugsweise im vorderen Bereich der seitlichen Rahmenteile integrierte bzw. mit diesem fest verbundene Schraubmutter geschraubt zu werden.

Der an der vorderen Befestigungsstelle eingeführte Schraubbolzen kann vorzugsweise ein selbstsichernder Schraubbolzen sein, der lediglich eingedreht zu werden braucht und sich dann selbst sichert. Auf diese Weise ist eine nicht nur einfach herzustellende, sondern insbesondere einfach zu handhabende und besonders sichere Einrichtung geschaffen, bei welcher ein unbeabsichtigtes Zurückklappen der Gepäckbrücke, insbesondere während einer Fahrt praktisch ausgeschlossen werden kann.

Nachfolgend wird die Erfindung anhand einer bevorzugten Ausführungsform unter Bezugnahme auf die anliegenden Zeichnun gen im einzelnen erläutert. Es zeigen:

Fig.1 eine schematische perspektivische Ansicht einer bevorzugten Ausführungsform einer das Hinterrad eines Motorrads umgreifenden Halterungseinrichtung mit Seitenteilen und eine diese Seiteteile verbindenden Gepäckbrücke gemäß der Erfindung,

Fig.2 eine schematische, zum Teil in Einzelteile aufgelöste Darstellung einer an einem Seitenteil zu befestigenden Gepäckbrücke und einem zugehörigen seitlichen Halterungsteil, und

Fig.3 eine schematische Seitenansicht eines Halterungsteils mit zugeordneter Gepäckbrücke, wobei der zurückgeklappte Teil des Seitenteils mit zugeordneter Gepäckbrücke strichpunktiert wiedergegeben ist.

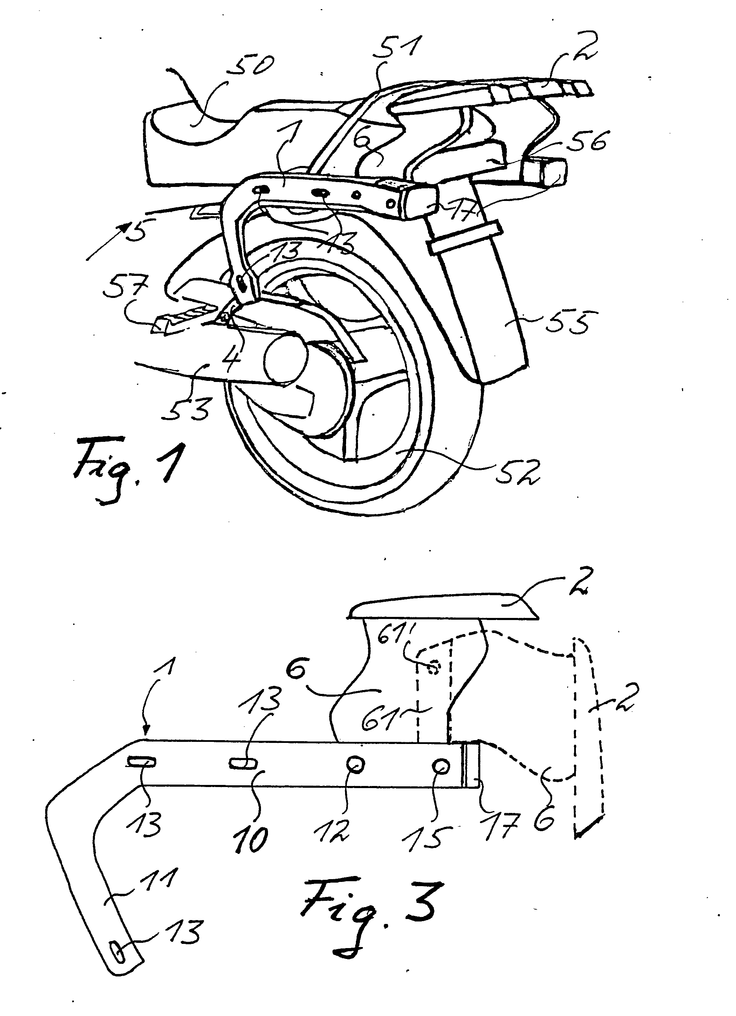

In Fig.1 ist schematisch der hintere Teil eines Motorrads 5 dargestellt, an welchem eine Sitzbank 50, ein Haltebügel 51, ein Hinterrad 52, ein Auspuff 53, ein Schutzblech 55, ein Rück-und Bremslicht 56, eine Fußraste 57 für den Sozius sowie weitere, nicht näher bezeichnete und hier angeführte Teile zu erkennen sind.

Etwa in Höhe des unteren Randes der Sitzbank 50 ist mittels in Fig.1 nicht erkennbarer Beschlagteile ein Halterungsteil in Form eines bumerangförmigen Tragelements 1 am nicht näher bezeichneten Rahmen des Motorrads 5 befestigt. Das untere freie Ende des Tragelements 1 ist mittels eines schematisch dargestellten Befestigungsteils 4 an der Fußraste 57 befestigt. Am hinteren freien Ende der Tragelemente 2 ist jeweils ein Blinker 17 integriert.

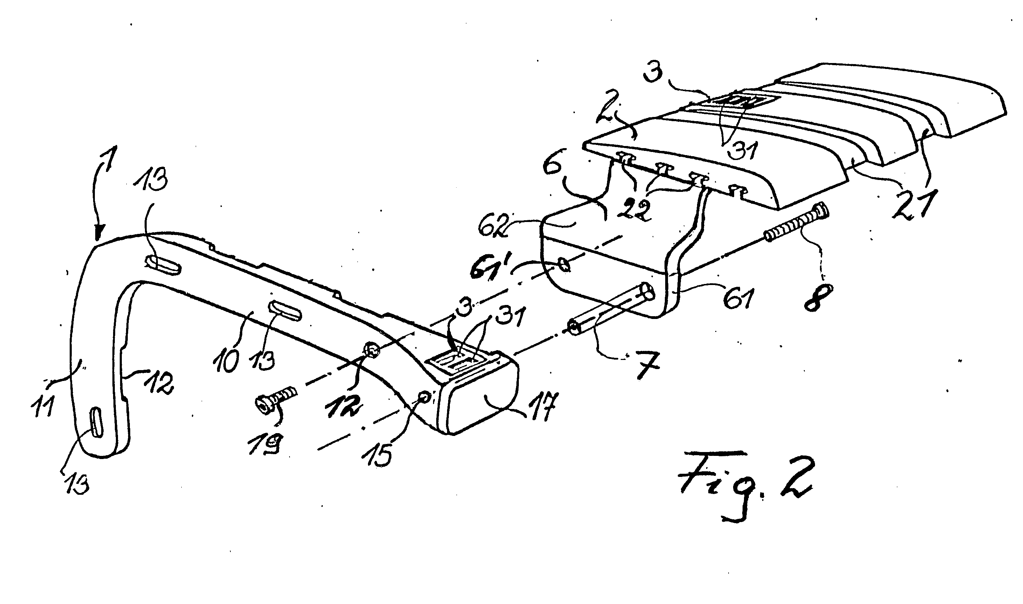

Am dem in Fig.1 etwa waagrecht verlaufenden Schenkel 10 (siehe Fig.2) der Tragelemente 2 sind im Bereich des Blinkers 11, d.h. im (in Fahrtrichtung gesehen) hinteren Ende vorzugsweise abgewinkelte Seitenteile 6 angebracht, deren obere Kanten durch eine quer verlaufende Gepäckbrücke 2 miteinander verbunden ist. Wie im einzelnen aus Fig.2 zu ersehen ist, weist die Gepäckbrücke 2 eine geschlossene Oberseite ohne irgendwelche Durchbrüche auf und ist im Längsschnitt dem Profil eines Heckspoilers angenähert. Auf der Oberseite der Brücke 2 sind in deren Längsrichtung, welche im montierten Zustand der Brücke parallel zur Fahrzeuglängsachse verläuft, vorzugsweise zwei Führungsnute 21 ausgebildet.

Ferner ist am (in Fahrtrichtung gesehen) vorderen Ende der Gepäckbrücke 2 zwischen den Führungsnuten 21 in einer nicht näher bezeichneten Vertiefung eine schwenkbar gelagerte Halterungszunge 3 mit zwei Ausschnitten 31 untergebracht. In der Unterseite der Gepäckbrücke 21 sind senkrecht zur Längsrichtung verlaufende T-förmige Querschlitze 22 ausgebildet, die sich über einen Großteil der Brückenbreite erstrecken und in denen Schraubmuttern zur Befestigung der Brücke aufgenommen sind.

Das linke schematisch dargestellte Seitenteil 6 weist einen unteren, im montierten Zustand etwa vertikalen Befestigungsabschnitt 61 auf, welcher in einen nach oben und schräg nach hinten verlaufenden mittleren Bereich 62 des Seitenteils 6 übergeht. In dem unteren etwa vertikal verlaufenden Befestigungsabschnitt 61 sind eine Bohrung 61' sowie ein etwa waagrecht von dem unteren Befestigungsabschnitt 61 abstehender und mit diesem vorzugsweise eine Einheit bildender Bolzen 7 vorgesehen. Dieser etwa waagrecht nach außen abstehende Bolzen 7 kann an seinem vorderen freien Ende als Schraubbolzen ausgebildet sein, was im einzelnen in Fig. 2 nicht dargestellt ist; auf diesen Schraubbolzen kann eine ebenfalls nicht näher dargestellte Schraubmutter als Sicherung aufgebracht werden.

Ferner kann der mit dem Befestigungsabschnitt 61 starr verbundene Bolzen 7 durch einen Schraubbolzen 8 ersetzt werden, der über eine der Bohrung 61' entsprechende Bohrung in dem Befestigungsabschnitt 61 eingeführt werden kann.

In Fig. 2 ist ein linksseitiges, bumerangförmiges Tragelement 1 in perspektivischer Darstellung wiedergegeben. Das einteilige Tragelement 1 besteht aus einem langen Schenkel 10 und einem kurzen Schenkel 11, welcher zu dem langen Schenkel 10 unter einem Winkel von weniger als 90° angeordnet ist. Das freie (in Fahrtrichtung gesehen) hintere Ende des langen Schenkels ist in Draufsicht breiter ausgebildet; in der Verbreiterung ist ein nicht näher dargestelltes Blinkergehäuse mit Reflektor untergebracht, welche insgesamt den Blinker 17 bilden.

An der Oberseite der Verbreiterung des langen Schenkels 10 ist in einer nicht näher bezeichneten, etwa rechteckigen Vertiefung eine in eine vertikale Lage hochklappbare Halterungszunge 3 mit zwei Durchbrüchen 31 aufgenommen.

Im vorderen und mittleren Bereich des langen Schenkels 10 sowie am unteren Ende des kurzen Schenkels 11 des Tragelements 1 sind insgesamt drei Langlöcher 13' ausgebildet. Durch nicht näher dargestellte, in die Langlöcher 13' eingeführte Schraubbolzen werden ebenfalls nicht dargestellte Beschlagteile an dem Tragelement 1 befestigt, über welche das Tragelement 1 entsprechend ausgerichtet am Rahmen des Motorrads 5, so, wie aus Fig.1 zu ersehen, befestigbar ist. Im hinteren Bereich des Tragteils 1 ist eine Bohrung 12 vorgesehen, durch welche ein schematisch angedeuteter Schraubbolzen 19 einführbar ist. Ferner ist am äußersten Ende des langen Schenkels 10 des Trageteils noch eine weitere Bohrung 15 vorgesehen, in welche beispielsweise der mit dem Befestigungsabschnitt 61 starr verbundene Bolzen 7 ausgenommen wird.

Der fertig montierte Zustand einer das Hinterrad 52 eines Motorrads 5 umgereifenden Halterungseinrichtung ist aus Fig.1 zu ersehen. Hierbei ist, wie vorstehend beschrieben, das Tragteil 1 über Befestigungs-bzw. Beschlagteile am Rahmen des Motorrads 5 befestigt. Das Seitenteil 6 ist mit dem von ihm etwa waagrecht vorstehenden Bolzen 7 in die am äußersten Ende des Tragteils 1 ausgebildete Bohrung 15 aufgenommen. In der in Fig.1 wiedergegebenen Lage ist dann jedes der Seitenteile 6 zusammen mit der sie verbindenden und an ihnen befestigten Gepäckbrücke 2 durch den Schraubbolzen 19 gesichert, wenn dieser durch die Bohrung 12 und die Bohrung 61' im Befestigungsabschnitt des Seitenteils 6 eingeführt und in eine vorzugsweise in dem Befestigungsabschnitt 61 integrierte bzw. fest gehaltene Mutter geschraubt und dadurch gesichert ist.

Wenn nun die Gepäckbrücke 2 in eine in Fig.3 gestrichelt wiedergegebene Lage zurückgeklappt werden soll, braucht bei der erfindungsgemäßen Ausführungsform lediglich der Schraubbolzen 19 gelockert und herausgenommen zu werden. Hierauf kann dann die Brücke bereits in die in Fig.3 gestrichelt wiedergegebene Lage zurückgeklappt werden, in welcher ein unterer Abschnitt im mittleren Bereich 62 des Seitenteils auf dem Blinker 17 aufliegt. Zur Sicherung der hochgeklappten, in Fig.3 ausgezogen wiedergegebenen Lage der Gepäckbrücke 2 braucht dann wie bereits beschrieben, lediglich der Schraubbolzen 19 durch die Bohrung 12 und die Bohrung 61' eingeführt und in die vorzugsweise im Befestigungsabschnitt 61 integrierte Mutter geschraubt werden.

## Ansprüche

1. Das Hinterrad eines Motorrad umgreifende Halterungseinrichtung für Gepäckstücke, insbesondere Motorradkoffer, mit zwei seitlichen Halterungsteilen, von welchen jedes in seinem hinteren Bereich eine vordere und hintere Befestigung für jeweils ein die beiden Halterungsteile nach oben überragendes, umklappbares Seitenteil aufweist, und mit einer die Oberkanten der beiden Seitenteile verbindenden Gepäckbrücke, dadurch **gekennzeichnet**, daß ein im unteren Bereich (61) jedes Seitenteils (6) etwa waagrecht von diesem nach außen abstehender und mit diesem (61) eine Einheit bildender Bolzen (7) ausgeführt ist, welcher in einer Bohrung (19) am äußersten Ende des Halterungsteils (1) aufgenommen ist, während die vordere Befestigung zwischen Seitenteil (6) und Halterungsteil (1) jeweils vorzugsweise als lösbarer und herausnehmbarer Schraubbolzen (19) ausgebildet ist, nach dessen Herausnahme die Seitenteile (6) samt Gepäckbrücke (2) um etwa 90° zurückklappbar sind.

2. Halterungseinrichtung nach Anspruch 1, dadurch **gekennzeichnet**, daß der von dem Seitenteil (6) etwa waagrecht nach außen abstehende Bolzen (7) an seinem freien Ende als Schraubbolzen ausgebildet ist, auf welchen nach Einführen in die Bohrung (15) des Halterungs teils (1) als Sicherung eine Schraubmutter aufgebracht ist.

3. Halterungseinrichtung nach Anspruch 1, dadurch **gekennzeichnet**, daß statt des vom Seitenteil (6, 61) abstehenden Bolzens (7) ein Schraubbolzen (8) durch eine Bohrung (61') im unteren Abschnitt (61) des Seitenteils (6) und durch die entsprechende Bohrung (15) am äußersten Ende des Tragteils (1) einführbar und von außen oder von innen durch eine Schraubmutter sicherbar ist.

Fig. 1

Fig. 3

Fig. 2

0 240 612